# EUROPEAN PATENT SPECIFICATION

(11) **EP 1 911 250 B1**
(45) Date of publication and mention of the grant of the patent: **15.02.2017**
(21) Application number: 06785126.1
(22) Date of filing: 19.06.2006
(51) Int. Cl.: H04L 29/08

(54) **TECHNIQUE FOR TRANSLATING LOCATION INFORMATION**
VERFAHREN ZUM ÜBERSETZEN VON STANDORTINFORMATIONEN
TECHNIQUE DE TRADUCTION D'INFORMATION DE LOCALISATION

(30) Priority: 29.07.2005 US 703951 P; 06.01.2006 US 327152
(43) Date of publication of application: 16.04.2008
(73) Proprietor: Cisco Technology, Inc., San Jose, CA 95134 (US)
(72) Inventor: POLK, James, M., Colleyville, TX 76034 (US)
(74) Representative: Kazi, Ilya
(86) International application number: PCT/US2006/023855
(87) International publication number: WO 2007/018752

(56) References cited:
- WO-A2-01/90920
- JP-A- 2002 116 033
- US-A1- 2001 051 852
- US-A1- 2004 088 346
- ROSENBERG ET AL: "RFC 3261: SIP: Session Initiation Protocol" IETF REQUEST FOR COMMENTS, June 2002 (2002-06), pages 1-269, XP002323877 cited in the application

## Description

### FIELD OF THE INVENTION

This invention relates to communication networks and in particular to translating, in a communication network, information that is associated with a location.

### BACKGROUND OF THE INVENTION

A communication network is a geographically distributed collection of nodes interconnected by communication links and segments for transporting communications (e.g., data, voice, video) between communication units (end nodes), such as personal computers, certain telephones, personal digital assistants (PDAs), video units and the like. Many types of communication networks are available, with the types ranging from local area networks (LANs) to wide area networks (WANs). LANs typically connect nodes over dedicated private communications links located in the same general geographical location, such as a building or campus. WANs, on the other hand, typically connect large numbers of geographically dispersed nodes over long-distance communications links, such as common carrier telephone lines. The Internet is an example of a WAN that connects networks throughout the world, providing global communication between nodes on various networks. The nodes typically communicate over the network by exchanging discrete frames or packets of data according to predefined protocols, such as the Transmission Control Protocol/Internet Protocol (TCP/IP). In this context, a protocol is a set of rules defining how the nodes interact with each other.

A communication network may comprise a series of intermediate nodes (e.g., routers) that are configured to carry communications through the network to the end nodes. Routers are often configured to "route" data, such as packets, between various nodes in the network. Routing is typically performed at layer-3 (L3), which is the network layer of the Open Systems Interconnection Reference Model (OSI-RM).

Routers often maintain forwarding databases (FDBs) which are typically configured to hold routing information (e.g., L3 addresses) and interface information that the router uses to determine where data are to be forwarded in order to reach its destination. For example, a router may have a routing database containing one or more entries wherein each entry contains an L3 destination address of a destination node and interface information about an interface on the router through which the destination node may be reached. Data (e.g., a data packet) containing a destination address that matches a destination address of an entry in the routing table is forwarded by the router to the interface specified by the matching entry for transfer to the destination node.

A router may execute one or more routing protocols that enable the router to route packets and exchange routing information with other routers in the network. The routers often use this information to configure (e.g., compute) their FDBs. The routing protocols may include distance-vector protocols, such as the Routing Information Protocol (RIP), or link-state protocols, such as the Intermediate-System-to-Intermediate-System (IS-IS) protocol and the Open Shortest Path First (OSPF) protocol.

Routing information is typically exchanged between the routers in the form of advertisement messages. For example, nodes executing the IS-IS protocol exchange routing information using an advertisement message called a Link State Packet (LSP). Likewise, nodes executing the OSPF protocol exchange routing information using an advertisement message called a Link State Advertisement (LSA). An intermediate node that acquires an advertisement message may use information contained therein to update its FDB.

Communication networks are increasingly being used to transport many forms of information including, e.g., voice and video information. Information may be carried on a communication network using various technologies, such as Voice over IP (VoIP).

VoIP refers to a group of technologies that may be used to transmit e.g., voice information over communication networks from a source (calling party) to a destination (called party). Such networks may include a plurality of agents that convert e.g., voice and/or video information from its traditional form to a form that is suitable for packet transmission. In other words, the agent encodes, compresses and encapsulates the information into a plurality of data packets that are suitable for being carried by the communication network. Examples of agents include IP telephones, VoIP network interfaces, certain private branch exchanges (PBXs), personal computers (PCs) running communication applications, certain personal digital assistants (PDAs), network devices providing voice gateway services and so on.

In certain communication networks, such as VoIP networks, a session protocol may be employed to establish a session (connection) that supports a call between a calling party and a called party. An example of a session protocol that is commonly used is the well-known Session Initiation Protocol (SIP) which is described in J. Rosenberg et al., "SIP: Session Initiation Protocol," Internet Engineering Task Force (IETF) Request For Comments (RFC) 3261. SIP operates at the application layer of the OSI-RM and is defined to establish and maintain sessions between endpoints (e.g., SIP-based telephones) in a communication network.

In accordance with SIP, endpoints are referred to as User Agents (UAs). When a UA comes on-line, it typically registers with a registration service, called a policy data point (PDP), using a SIP "register" (REGISTER) command. The PDP maintains information about the UA which may include its location, how to reach it and authentication information associated with the UA that may be used to authenticate the UA. Typically, after a UA is registered, the UA is available to receive as well as initiate calls.

When a call is initiated by a calling party to a called party, a session is typically established between the calling and called parties' UAs to support the call. Establishing a session between the parties often involves (a) authenticating both parties and (b) successfully exchanging a sequence of messages between the parties in a predetermined manner. Authentication often involves ensuring the parties have permission to establish a call in the network. The sequence of messages may include (a) an invite (INVITE) message issued by the calling party to initiate the session between the calling and called parties, (b) an acknowledgement ("200 OK") message issued by the called party to acknowledge the "invite" message and indicate the called party accepts participation in the session, followed by (c) an acknowledgement (ACK) message issued by the calling party to acknowledge the called party's acceptance. After the session is established, a channel may then be established and associated with the session. A protocol that is often used to establish a channel in a VoIP network is the the Real-time Transport Protocol (RTP) described in H. Schulzrinne et al., "RTP: A Transport Protocol for Real-Time Applications," IETF RFC 3550.

Some communication networks, such as IP-based communication networks, enable a location associated with a communication unit to be determined. Here, the communication unit's location may be preconfigured in the server or determined by the server using triangulation or other methods. The server may communicate the location to the communication unit using a version of the Dynamic Host Configuration Protocol (DHCP) that is extended to provide the location information. In a typical arrangement, the communication unit requests its location information from the server using a DHCP request message and the server responds to the communication unit with a DHCP response message that contains the communication unit's location.

Various existing techniques may be used to extend the DHCP protocol to transfer the location information. For example, J. Polk et al., "Dynamic Host Configuration Protocol Option for Coordinate-based Location Configuration Information," IETF, RFC 3825 describes a technique for extending DHCP to add an option to the DHCP message which can be configured to carry, *inter alia,* the latitude, longitude and altitude location information associated with a node in a network. Similarly, H. Schulzrinne, "Dynamic Host Configuration Protocol (DHCPv4 and DHCPv6) Option for Civic Addresses Configuration Information," IETF, draft-ietf-geopriv-dhcp-civil-06.txt describes a DHCP message option that may be used to convey location e.g., a postal address of a node in a network.

The prior art also teaches about the translation of location information, as for example the publication US2004/088346-A1 and the publication US2001/051852-A1, which both disclose relevant techniques however without focussing on efficiency and reliability.

### BRIEF DESCRIPTION OF THE DRAWINGS

The foregoing and other objects, features and advantages of the invention will be apparent from the following more particular description of preferred embodiments of the invention, as illustrated in the accompanying drawings in which like reference characters refer to the same parts throughout the different views. The drawings are not necessarily to scale, emphasis instead being placed upon illustrating the principles of the invention.
FIG. 1 is a block diagram of an exemplary communication network that may implement the present invention.
FIG. 2 is a block diagram of a communication unit that may be used with the present invention.
FIG. 3 is a block diagram of a translation server that may be used with the present invention.
FIG. 4 illustrates a location translation database that may be used with the present invention.
FIG. 5 illustrates a request message that may be used with the present invention to request that a location be translated from a first format to a second format.
FIG. 6 illustrates a response message that be used with the present invention to respond to a request to translate a location from a first format to a second format.
FIG. 7 illustrates a Dynamic Host Configuration Protocol (DHCP) message containing a DHCP option for coordinate location configuration information (LCI) that may be used with the present invention.
FIG. 8 illustrates a dialogue between a communication unit and a translation server for translating location information associated with the communication unit in accordance with an aspect of the present invention.
FIG. 9 is a flow chart of a sequence of steps that may be used to request information associated with the location of an entity from a server in accordance with an aspect of the present invention.

### DETAILED DESCRIPTION OF THE INVENTION

A description of preferred embodiments of the invention follows.

It should be noted, illustrated embodiments of the present invention, described herein, are described as using the Session Initiation Protocol (SIP) to establish and maintain sessions in a communication network as well as exchange information in the network. A version of the SIP protocol that may be used with the present invention is described in J. Rosenberg et al., "SIP: Session Initiation Protocol," RFC 3261, June 2002, available from the Internet Engineering Task Force (IETF). It should be noted that other query/response protocols, such as the Simple Object Access Protocol (SOAP), Hypertext Transfer Protocol (HTTP), File Transfer Protocol (FTP) and Simple Mail Transfer Protocol (SMTP), may take advantage of aspects of the present invention.

One problem with the above-described techniques is that while they may be used to convey a location of an entity (e.g., a communication unit) in a communication network to the entity, they do not accommodate converting the location from one format to another. For example, an entity may wish to display its location in a format that is readily understood by a user, such as in a civic address format (e.g., street, city, state, etc.). If the entity receives its location from e.g., a server, in a geographical coordinate format (e.g., latitude, longitude, etc.) it would have to convert this format to a user readable format before displaying the location to the user. Many devices, especially small devices, do not have the capacity to perform this conversion, thus, they may not be able to provide location information in a format that is readily understood by a user.

The present invention overcomes shortcomings associated with the prior art by incorporating a technique for enabling a first entity in a communication network (e.g., a communication unit) to request that a second entity (e.g., a server) translate a location associated with the first entity from a first format, which may not be understood by a user, to a second format, which may be readily understood by the user. According to an aspect of the technique, a request to translate a location associated with the first entity is generated. The request contains the location associated with the first entity in the first format. The request is forwarded to the second entity which may be a "trusted source" meaning that the first entity considers the second entity a trustworthy source of information. The second entity receives the request and translates the location contained therein from the first format to the second format. A notification containing the translated location in the second format is then generated by the second entity and forwarded to the first entity. The first entity receives the notification and processes it accordingly.

Advantageously, having a second entity perform the location translation offloads this process from the first entity and obviates having the first entity be configured to perform the translation. Further, advantageously, utilizing the invention with a second entity that is a trusted source enables the translated location information to be provided with a high degree of assurance that the information is correct.

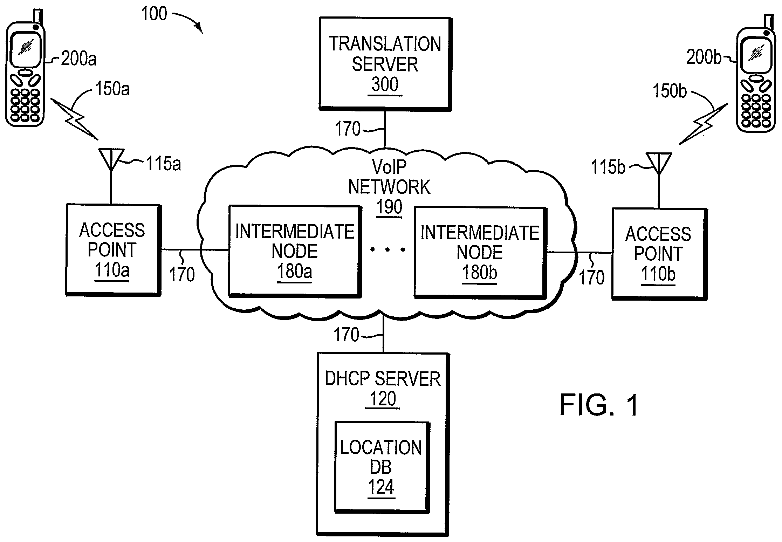

FIG. 1 is a high-level block diagram of an exemplary communication network 100 that may implement the present invention. Communication network 100 comprises a collection of communication links 150, 170 interconnecting a plurality of nodes such as communication units 200, access points 110, Dynamic Host Configuration Protocol (DHCP) server 120, intermediate nodes 180 and translation server 300 to form an internetwork of nodes. These internetworked nodes communicate by exchanging data packets according to a pre-defined set of network protocols, such as the Transmission Control Protocol/Internet Protocol (TCP/IP) and the Voice over IP (VoIP) protocol. A network protocol as used herein is a formal set of rules that define how data is exchanged between nodes in a communication network.

The intermediate nodes 180 are conventional intermediate nodes, such as routers, that are configured to implement VoIP network 190. The access points 110 are configured to enable the communication units 200 to transfer information (e.g., data) between the VoIP network 190 and communication units 200. To that end, the access points 110 contain circuitry that is configured to transmit and receive signals (e.g., radio frequency (RF) signals) that carry the information between the access points 110 and the communication units 200 via wireless links 150. Examples of access points that may be used with the present invention include certain Institute of Electrical and Electronic Engineers (IEEE) 802.11 compliant access points as well as certain cellular telephone wireless systems that support the transfer of data traffic by wireless means.

Communication units 200 are conventional communication units, such as wireless telephones, personal digital assistants (PDAs), IP telephones and the like, that enable, e.g., audible and/or visual communications to be converted into signals that are transferred to the access points 110 via wireless links 150. Information (e.g., voice, video) is typically conveyed between the communication units 200 using calls which are established in network 100 between the communication units 200. It should be noted that the present invention may be adapted to work with fixed as well as mobile devices that are able to communicate via a communication network. These fixed devices may be connected to the communication network using wired means.

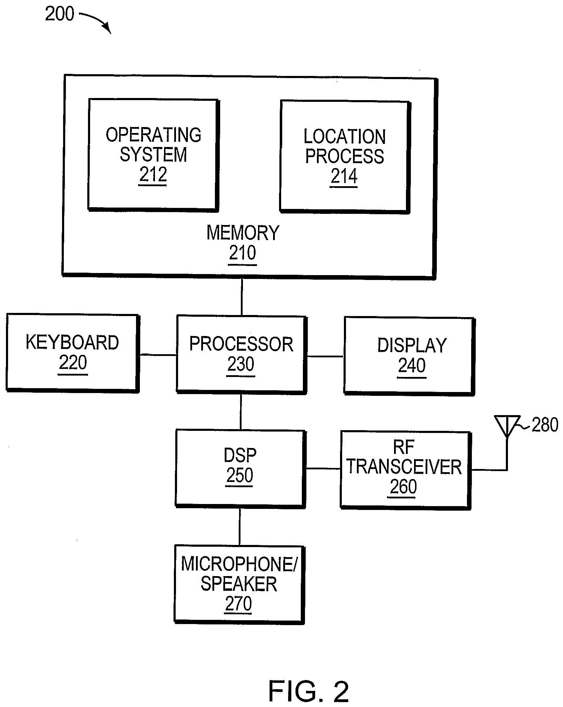

FIG. 2 is a high-level block diagram of an exemplary communication unit 200 that may be used with the present invention. Communication unit 200 comprises a memory 210, a keyboard 220, a processor 230, a display unit 240, a digital signal processor (DSP) 250, an RF transceiver 260, a microphone/speaker 270 and an antenna 280. The keyboard 220 is a conventional keyboard device that enables information to be input into the communication unit, e.g., by a user. The processor 230 is a conventional central processing unit (CPU) configured to execute computer-executable instructions contained in memory 210 including instructions that implement aspects of the present invention. The display unit 240 is a conventional display unit that enables images (e.g, graphics, text, icons, pictures) to be displayed on the communication unit 200. The DSP 250 is a conventional digital signal processor that is capable of processing various analog and/or digital signals generated by e.g., the RF transceiver 260 and microphone/speaker 270 as well as providing various digital and/or analog signals to the microphone/speaker 270 and the RF transceiver 260. The microphone/speaker 270 enables audio to be input into the communication unit 200 as well as output from the communication unit 200. The RF transceiver 260 is a conventional RF transceiver configured as a network interface that enables signals to be transferred between the network 100 and the communication unit 200 via link 150. It should be noted that transceiver 260 may be capable of transmitting/receiving information from and to the communication unit 200 using means other than RF. For example, the transceiver 260 may be configured to transmit and receive information using infrared frequencies, light, wired means, sub-RF frequencies and the like.

The memory 210 is a computer-readable medium implemented as a random access memory (RAM) comprising RAM devices, such as dynamic RAM (DRAM) devices and/or flash memory devices. Memory 210 contains various software and data structures used by the processor 230 including software and data structures that implement aspects of the present invention. Specifically, memory 210 includes an operating system 212 and a location process 214. The operating system 212 functionally organizes the communication unit 200 by invoking operations in support of software processes and services executing on the communication unit, such as location process 214. Location process 214, as will be described further below, comprises computer-executable instructions to (a) generate requests to translate location information associated with the communication units from a first format to a second format, (b) forward the requests to the translation server 300 and (c) process responses to the requests received from the translation server 300.

Translation server 300 is a conventional server that (a) processes requests to convert location information associated with nodes (e.g., communication units 200) in the network 100 from one format to another, (b) generates responses containing the converted location information and (c) forwards the responses to the appropriate nodes. Translation server 300 may be a "trusted source" meaning that the nodes in the network 100 consider the server 300 as a trustworthy source of information.

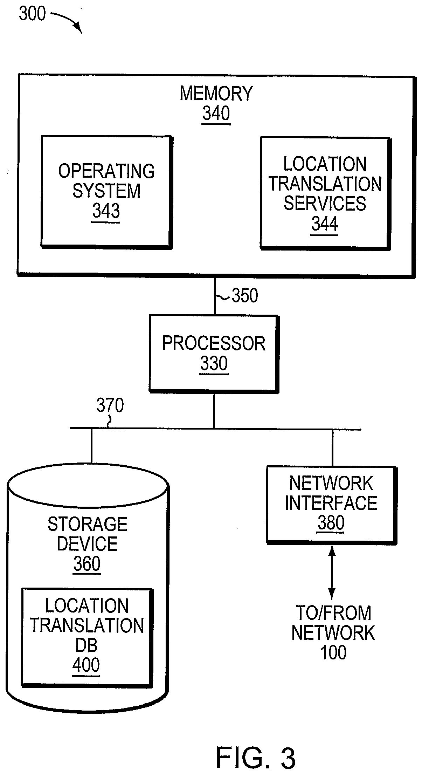

FIG. 3 is a high-level block diagram of an exemplary translation server 300 that may be used with the present invention. Server 300 comprises a memory 340 coupled to a processor 330 via a memory bus 350 and, a storage device 360 and a network interface 380 coupled to the processor 330 via an input/output (I/O) bus 370. It should be noted that server 300 may include other I/O devices, such as keyboards and display units.

The network interface 380 interfaces the server 300 with the network 100 and enables data (e.g., packets) to be transferred between the server 300 and other nodes in the network 100. To that end, network interface 380 comprises conventional interface circuitry that incorporates signal, electrical and mechanical characteristics, and interchange circuits, needed to interface with the physical media of the network 100 and protocols running over that media.

Storage device 360 is illustratively a conventional storage device (e.g., a disk) capable of storing information requested by communication units 200. This information includes a translation location database (DB) 400 that contains data which may be used to translate a location of a communication unit 200 from a first format to a second format.

The memory 340 is a computer-readable medium implemented as a RAM comprising RAM devices, such as DRAM devices and/or flash memory devices. Memory 340 contains various software and data structures used by the processor 330 including software and data structures that implement aspects of the present invention. Specifically, memory 340 includes an operating system 343 and location translation services 344. The operating system 343 functionally organizes the translation server 300 by invoking operations in support of software processes and services executing on the server 300, such as location translation services 344.

Location translation services 344, as will be described further below, comprises computer-executable instructions to process requests to translate location information from a first format to a second format in accordance with an aspect of the present invention. Specifically, location translation services 344 comprises computer-executable instructions for (a) translating location information contained in the requests from a first format to a second format and (b) generating a response wherein the response contains the location information in the second format.

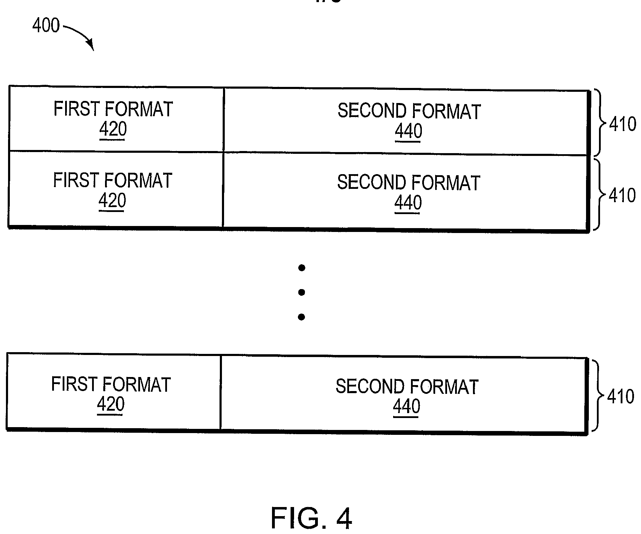

FIG. 4 illustrates a location translation DB 400 that may be used with the present invention. DB 400 is illustratively a table comprising one or more entries 410 wherein each entry contains a first format field 420 and a second format field 440. The first format field 420 holds information that represents a location that may be e.g., associated with a communication unit 200 in a first format, such as geographical coordinates (e.g., latitude, longitude, altitude). The second format field 440 holds information that is associated with the location 420 in a second format, such as a civic address (e.g., unit number, street, city, state).

It should be noted that functions performed by communication units 200 and the translation server 300, including functions that implement aspects of the present invention, may be implemented in whole or in part using some combination of hardware and/or software. It should be further noted that computer-executable instructions and/or computer data that implement aspects of the present invention may be stored in various computer-readable mediums, such as volatile memories, non-volatile memories, flash memories, removable disks, non-removable disks and so on. In addition, it should be noted that various electromagnetic signals, such as wireless signals, electrical signals carried over a wire, optical signals carried over optical fiber and the like, may be encoded to carry computer-executable instructions and/or computer data that implement aspects of the present invention on e.g., a communication network.

In accordance with an aspect of the present invention, location information is translated from one format to another using the SIP protocol. Specifically, the "options" (OPTIONS) message (request) in SIP and its "200 OK" response is used by an entity to direct e.g., translation server 300 to translate location information from one format to another and respond with the translated location information.

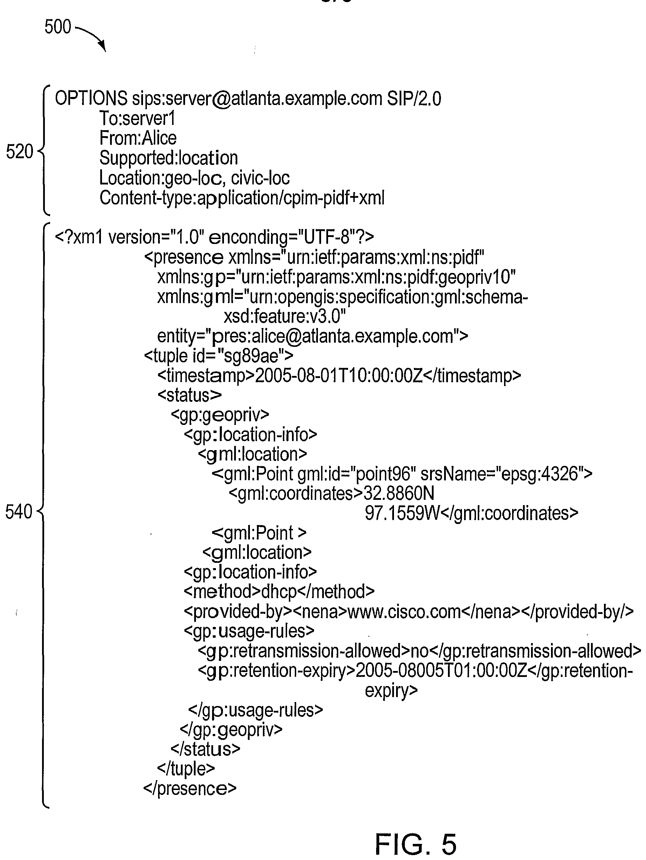

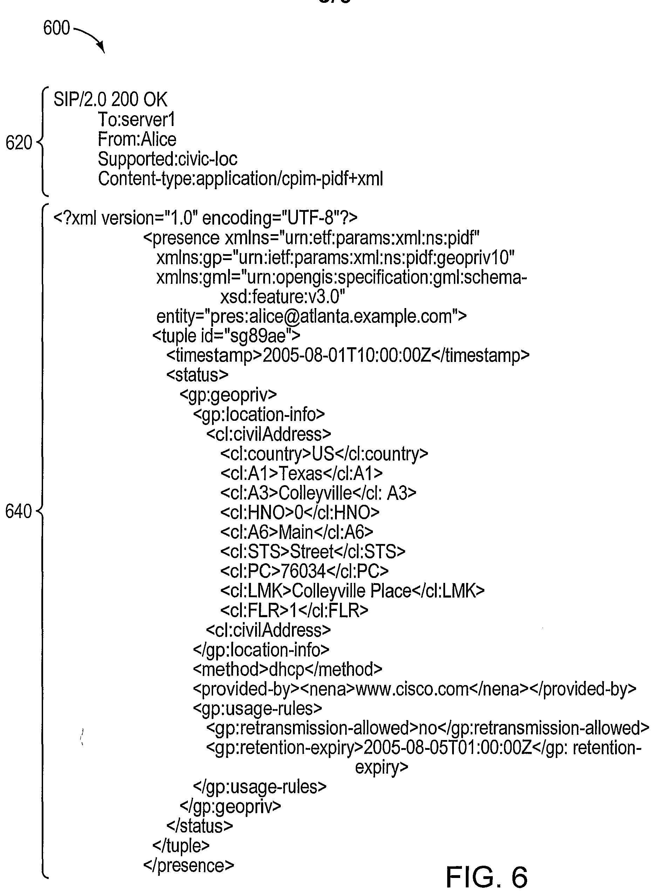

FIGs. 5 and 6 illustrate a request and a response, respectively, that may be used with the present invention. Request 500 is illustratively a SIP OPTIONS message comprising an options message portion 520 and a payload portion 540. The options message portion 520 contains various information including a "location" field which indicates first and second formats for the location information. The payload portion 540 is illustratively a Presence Information Data Format (PIDF) - Location Object (PIDF-LO) that contains the location information in the first format. PIDF-LOs are described in J. Peterson, "A Presence-based GEOPRIV Location Object Format," draft-ietf-geopriv-pidf-lo-03.txt, September 2004, available from the IETF.

In accordance with an aspect of the present invention, in response to a query to translate location information from a first format to a second format, the translation server 300 translates the location information to the second format and forwards the translated location information to the requestor in a response message. FIG. 6 illustrates a response message 600 that be used with the present invention.

Response message 600 is illustratively a SIP "200 OK" message comprising a "200 OK" message portion 620 and a payload portion 640. The "200 OK" message portion 620 contains various information including a "supported" syntax element that indicates the format of location information contained in the payload 640. The payload portion 640 is illustratively a PIDF-LO object that contains location information in the requested (second) format. For example, in FIG. 6, the requested format indicated by the "supported" syntax element is "civic-loc" (indicating "civil address" format) and the payload portion contains the location information in this format.

DHCP server 120 is preconfigured with information about the location of entities (nodes) in network 100. Illustratively, DHCP server 120 maintains this preconfigured information in a location database 124. An entity (e.g., a communication unit 200) may learn its location from the server 120 by (a) generating a DHCP message to request the information and (b) forwarding the generated request to the DHCP server 120. The server responds to the request with a DHCP message that contains the location information. It should be noted that entities in network 100 may use other means to determine their location, such as via a Global Positioning System (GPS), triangulation methods and the like.

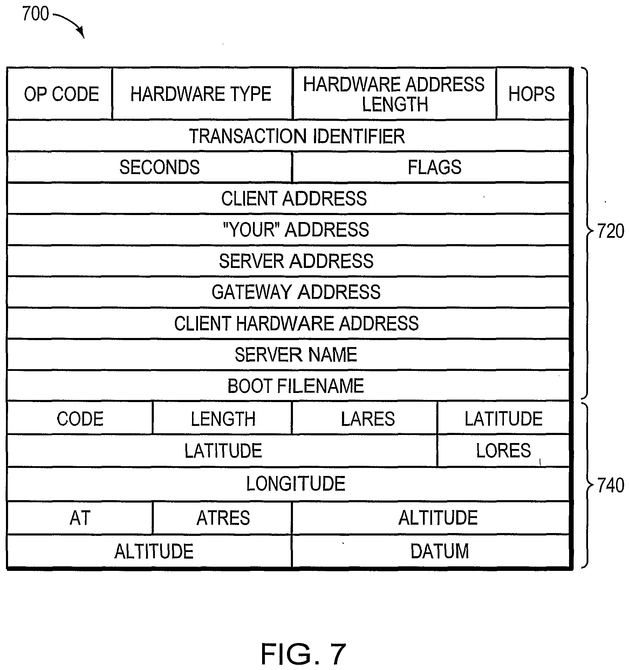

FIG. 7 is a block diagram of a DHCP message 700 that may be used by a node to learn its location. Message 700 includes various DHCP information 720 and a DHCP coordinate location configuration information (LCI) option 740. The DHCP information contains conventional DHCP message information, such as an operation (OP) code, client address, "your" address and so on.

The option field 740 further contains a code field, a length field, a latitude resolution (LARES) field, a latitude field, a longitude resolution (LORES) field, a longitude field, an altitude type (AT) field, an altitude resolution (ATRES) field, an altitude field and a datum field. The code field holds a value that identifies the option 740 as a coordinate LCI option. The length field holds a value that represents a length of the option 740, illustratively in bytes. The LARES field holds a value that represents the number of valid bits in a fixed-point value of the latitude contained in the latitude field. The latitude field holds a value that represents a latitude associated with an entity. The LORES field holds a value that represents a number of valid bits in a fixed-point value contained in the longitude field. The longitude field holds a value that represents a longitude associated with the entity. The AT field holds a value that represents an altitude type associated with the entity (e.g., meters, floors) altitude. The ATRES field holds a value that represents a precision associated with the value contained in the altitude field. The altitude field holds a value that represents an altitude of the entity. The datum field holds a value that represents information about the object 740, e.g., map datum was used for the coordinates given by this option 740.

A version of the DHCP protocol that may be used with the present invention is described in R. Droms, "Dynamic Host Configuration Protocol," RFC 2131, March 1997, and a DHCP option for coordinate LCI that may be used with the present invention is described in J. Polk et al. "Dynamic Host Configuration Protocol Option for Coordinate Based Location Configuration Information" RFC 3825, July 2004, both of which are available from the IETF.

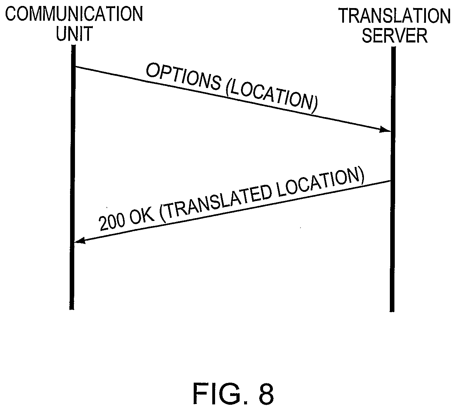

FIG. 8 illustrates a dialogue between a communication unit 200 and the translation server 300 that involves translating location information associated with the communication unit 200 from a first format to a second format in accordance with an aspect of the present invention. The dialogue begins when the communication unit 200 generates an "options" message containing the location information in the first format and forwards the options message to the translation server 300. The translation server 300 receives the options message and processes it including translating the location information contained therein into a second format. The translation server 300 then generates a "200 OK" message (response) containing the translated location information and forwards the "200 OK" message to the communication unit 200. The communication unit 200 eventually receives the "200 OK" message containing the translated location information.

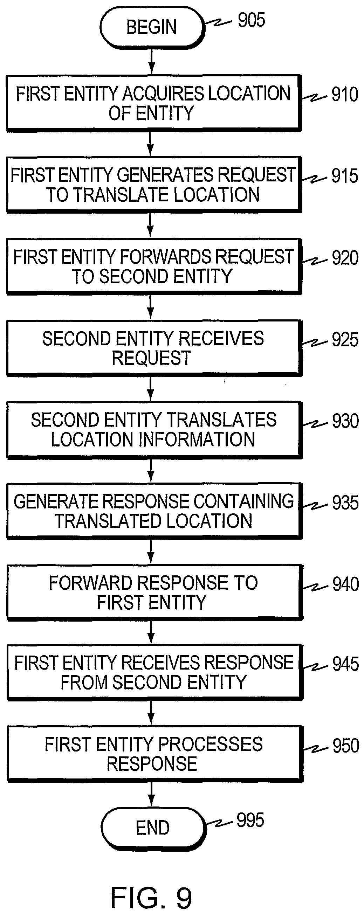

FIG. 9 is a flow chart of a sequence of steps that may be used to translate location information associated with a first entity (e.g., a communication unit 200) from a first format to a second format by a second entity (e.g., translation server 300) in accordance with an aspect of the present invention. The sequence begins at step 905 and proceeds to step 910 where the first entity acquires its location. As noted above, the first entity may acquire its location by querying a DHCP server, using triangulation methods, using a GPS and the like. It should be noted that an entity, such as a communication unit 200, may perform step 910 when it is first powered on, initialized, at certain intervals, at the beginning of a call and so on. Next, at step 915, the first entity generates a request (query) to translate the acquired location. Illustratively, the request is a SIP OPTIONS message 500, described above. At step 920, the first entity forwards the request to the second entity.

At step 925, the second entity receives the request and, at step 930, processes it including translating the location information contained therein from the first format to the second format. A response containing the location information in the second format is then generated at step 935 and forwarded to the first entity at step 940. The first entity, at step 945, receives the response and at step 950 processes accordingly. The sequence ends at step 995.

For example, referring to FIG. 1, assume communication unit 200a wishes to display a civic address of its current location on its display 240. Further assume that DHCP server 120 provides location information in geographical coordinate format and that the translation server 300 is configured to convert the location information from a geographical coordinated format to a civic address format.

Referring now to FIGs. 1 and 9, communication unit 200a acquires its location (step 910) by querying the DHCP server 120 for this information. Specifically, the communication unit's processor 230 generates a DHCP message 700 (FIG. 7) containing a coordinate LCI option 740 and forwards the message 700 to the DHCP server 120. The DHCP server 120 receives the message 700 and processes it in a conventional manner including querying database 124 to acquire the location information associated with communication unit 200a. After acquiring the communication unit's location information, the DHCP server 120 (a) generates a DHCP message 700 containing a coordinate LCI option 740 that holds the communication unit's determined location and (b) forwards the generated DHCP message 700 to the communication unit 200a. The communication unit 200a eventually receives the message 700 and processes it which may include extracting the location information and storing it in its memory 210.

After acquiring the location information, the communication unit 200a generates a request 500 to translate the location information from a geographical coordinate format to a civic address format (step 915). Specifically, processor 230 generates a SIP options message 500 containing (a) a header portion 520 that specifies that the location information contained in the payload is to be converted from a geographical coordinate format to a civic address format and (b) a payload portion that contains the location information in the geographical coordinate format.

The communication unit 200a then forwards the request 500 to the translation server 300 (step 920) via its RF transceiver 260. Specifically, the request is forwarded by processor 230 to the DSP 250 which directs the RF transceiver 260 to transmit the query 500 out the antenna 280 to access point 110a via wireless link 150a.

The request 500 travels through network 100 and is eventually received by the translation server 300 (step 925) which processes the request including translating the geographical coordinates therein to a civic address. Specifically, the request 500 is received by the translation server's network interface 380 (FIG. 3) and forwarded to processor 330. Processor 330 extracts the geographical coordinates from the payload portion 540 of the request 500 and queries the location translation DB 400 using the geographical coordinates to locate the location information in the second format (e.g., the location information in a civic address format). More specifically, the extracted geographical coordinates are compared with first format information 420 contained in the DB's entries 410 to determine if an entry 410 exists in the DB 400 that contains a first format value 420 which matches the geographical coordinates. Assuming a matching entry 410 is found, the translation server's processor 330 generates a response message 600 wherein the message portion 620 contains an indicator indicating that the civic format is supported and the payload portion 640 contains the civic address of the matching entry 410 illustratively contained in the matching entry's send format field 440 (step 935). The translation server 300 then forwards the response message 600 via the network 100 to the communication unit 200a (step 940). The communication unit 200a eventually receives the response message 600 (step 945) and processes it (step 950) which includes displaying the civic address on the communication unit's display 240.

## Claims

1. A method for translating location information of a communication unit (200) in a communication network from a first format to a second format, wherein the method comprises, at the communication unit:
generating a request (500) to translate the communication unit location information wherein the request includes a header portion (520) specifying the first format and the requested second format and a payload portion (540) containing the communication unit location information in the first format;
forwarding the request via the communication network (100) to a server (300) in the communication network;
at the server, translating the location information from the first format to the second format and generating a response (600) wherein the response contains the communication unit location information in the second format;
forwarding the response from the server to the communication unit via the communication network; and
receiving the response at the communication unit.

2. A method as defined in claim 1 wherein the request to translate the location information is a Session Initiation Protocol, SIP, OPTIONS message (500).

3. A method as defined in claim 1 wherein the response containing the location information translated into the second format is a SIP "200 OK" message (600).

4. A method as defined in claim 1 wherein the server is a trusted server.

5. A method as defined in claim 1 further comprising:
issuing a request to acquire the location information; and
receiving a response containing the location information.

6. A method as defined in claim 5 wherein the request to acquire the location information is a Dynamic Host Configuration Protocol, DHCP, request and the response containing the location information is a DHCP response (700).

7. A system for translating location information, wherein the system includes a server comprising:
means for receiving a request (500) from a communication unit (200) in a communication network (100) to translate location information of the communication unit from a first format to a second format, wherein the request includes a header portion (520) specifying the first format and the requested second format and a payload portion (540) containing the communication unit location information in the first format;
means for translating the communication unit location information contained in the request from the first format to the second format;
means for generating a response (600) containing the communication unit location information in the second format; and
means for forwarding the response to the communication unit via the communication network.

8. A system as defined in claim 7 wherein the request to translate the location information is a Session Initiation Protocol, SIP, OPTIONS message (500).

9. A system as defined in claim 7 wherein the response containing the location information translated into the second format is a SIP "200 OK" message (600).

10. A system as defined in claim 7 wherein the server is a trusted server.

11. A system as defined in claim 7, further comprising the communication unit (200), the communication unit having means for generating the request and further having means for: issuing a request to acquire the location information; and receiving a response containing the location information.

12. A system as defined in claim 11 wherein the request to acquire the location information is a Dynamic Host Configuration Protocol, DHCP, request and the response containing the location information is a DHCP response (700).

13. A system as defined in claim 7, the server further comprising: a location translation database (400) configured to hold the location information in the second format.

14. A system as defined in claim 13, the server further comprising:
means for querying the location translation database to locate the location information in the second format.

15. A computer readable medium comprising computer-executable instructions for performing a method according to any of claims 1 to 6.

## Patentansprüche

1. Verfahren zum Umsetzen von Ortsinformationen einer Kommunikationseinheit (200) in einem Kommunikationsnetz von einem ersten Format in ein zweites Format, wobei das Verfahren an der Kommunikationseinheit Folgendes beinhaltet:
Erzeugen einer Anforderung (500) zum Umsetzen der Kommunikationseinheitsortsinformationen, wobei die Anforderung einen Kopfteil (520), der das erste Format und das angeforderte zweite Format vorgibt, und einen Nutzlastteil (540) beinhaltet, der die Kommunikationseinheitsinformationen im ersten Format enthält;
Weiterleiten der Anforderung über das Kommunikationsnetz (100) zu einem Server (300) im Kommunikationsnetz;
Umsetzen, an dem Server, der Ortsinformationen vom ersten Format in das zweite Format und Erzeugen einer Reaktion (600), wobei die Reaktion die Kommunikationseinheitsortsinformationen im zweiten Format enthält;
Weiterleiten der Reaktion vom Server zur Kommunikationseinheit über das Kommunikationsnetz; und
Empfangen der Reaktion an der Kommunikationseinheit.

2. Verfahren nach Anspruch 1, wobei die Anforderung zum Umsetzen der Ortsinformationen eine SIP-(Session Initiation Protocol)-OPTIONS-Nachricht (500) ist.

3. Verfahren nach Anspruch 1, wobei die Antwort, die die in das zweite Format umgesetzten Ortsinformationen enthält, eine SIP "200 OK" Nachricht (600) ist.

4. Verfahren nach Anspruch 1, wobei der Server ein Trusted Server ist.

5. Verfahren nach Anspruch 1, das ferner Folgendes beinhaltet:
Ausgeben einer Anforderung zum Erfassen der Ortsinformationen; und
Empfangen einer die Ortsinformationen enthaltenden Antwort.

6. Verfahren nach Anspruch 5, wobei die Anforderung zum Erfassen der Ortsinformationen eine DHCP-(Dynamic Host Configuration Protocol)-Anforderung ist und die die Ortsinformationen enthaltende Antwort eine DHCP-Antwort (700) ist.

7. System zum Umsetzen von Ortsinformationen, wobei das System einen Server beinhaltet, der Folgendes umfasst:
Mittel zum Empfangen einer Anforderung (500) von einer Kommunikationseinheit (200) in einem Kommunikationsnetz (100) zum Umsetzen von Ortsinformationen der Kommunikationseinheit von einem ersten Format in ein zweites Format, wobei die Anforderung einen Kopfteil (520), der das erste Format und das angeforderte zweite Format vorgibt, und einen Nutzlastteil (540) beinhaltet, der die Kommunikationseinheitsortsinformationen im ersten Format enthält;
Mittel zum Umsetzen der in der Anforderung enthaltenen Kommunikationseinheitsortsinformationen vom ersten Format in das zweite Format; und
Mittel zum Erzeugen einer die Kommunikationseinheitsortsinformationen enthaltenden Antwort (600) im zweiten Format; und
Mittel zum Weiterleiten der Antwort zu der Kommunikationseinheit über das Kommunikationsnetz.

8. System nach Anspruch 7, wobei die Anforderung zum Umsetzen der Ortsinformationen eine SIP-(Session Initiation Protocol)-OPTIONS-Nachricht (500) ist.

9. System nach Anspruch 7, wobei die Antwort, die die in das zweite Format umgesetzte Ortsinformationen enthält, eine SIP "200 OK" Nachricht (600) ist.

10. System nach Anspruch 7, wobei der Server ein Trusted Server ist.

11. System nach Anspruch 7, das ferner die Kommunikationseinheit (200) umfasst, wobei die Kommunikationseinheit Mittel umfasst zum Erzeugen der Anforderung und ferner Mittel zum: Ausgeben einer Anforderung zum Erfassen der Ortsinformationen; und Empfangen einer die Ortsinformationen enthaltenden Antwort.

12. System nach Anspruch 11, wobei die Anforderung zum Erfassen der Ortsinformationen eine DHCP-(Dynamic Host Configuration Protocol)-Anforderung ist und die die Ortsinformationen enthaltende Antwort eine DHCP-Antwort (700) ist.

13. System nach Anspruch 7, wobei der Server ferner Folgendes umfasst: eine Ortsumsetzungsdatenbank (400), die zum Aufnehmen der Ortsinformationen in dem zweiten Format konfiguriert ist.

14. System nach Anspruch 13, wobei der Server ferner Folgendes umfasst:
Mittel zum Abfragen der Ortsumsetzungsdatenbank zum Suchen der Ortsinformationen im zweiten Format.

15. Computerlesbares Medium, das von einem Computer ausführbare Befehle zum Ausführen eines Verfahrens nach einem der Ansprüche 1 bis 6 umfasst.

## Revendications

1. Procédé de traduction d'informations de localisation d'une unité de communication (200) dans un réseau de communication à partir d'un premier format vers un deuxième format, le procédé comprend, au niveau de l'unité de communication :
générer une demande (500) de traduction des informations de localisation d'une unité de communication où la demande comprend une portion d'en-tête (520) spécifiant le premier format et le deuxième format demandé et une portion de données utiles (540) contenant les informations de localisation de l'unité de communication dans le premier format;
transmettre la demande par l'intermédiaire du réseau de communication (100) vers un serveur (300) dans le réseau de communication;
traduire, au niveau du serveur, les informations de localisation du premier format dans le deuxième format et générer une réponse (600) où la réponse contient les informations de localisation de l'unité de communication dans le deuxième format;
transmettre la réponse en provenance du serveur vers l'unité de communication par l'intermédiaire du réseau de communication; et
recevoir la réponse au niveau de l'unité de communication.

2. Procédé selon la revendication 1, dans lequel la demande de traduction des informations de localisation est un message Session Initiation Protocol, SIP, OPTIONS (500).

3. Procédé selon la revendication 1, dans lequel la réponse contenant les informations de localisation traduites dans le deuxième format est un message SIP "200 OK" (600).

4. Procédé selon la revendication 1, dans lequel le serveur est un serveur sécurisé.

5. Procédé selon la revendication 1, comprenant en outre :
émettre une demande pour acquérir des informations de localisation; et
recevoir une réponse contenant des informations de localisation.

6. Procédé selon la revendication 5, dans lequel la demande pour acquérir les informations de localisation est une demande Dynamic Host Configuration Protocol, DHCP, et la réponse contenant les informations de localisation est une réponse DHCP (700).

7. Système de traduction d'informations de localisation, selon lequel le système comprend un serveur comprenant :
un moyen de recevoir une demande (500), en provenance d'une unité de communication (200) dans un réseau de communication (100), de traduction d'informations de localisation de l'unité de communication d'un premier format dans un deuxième format, dans lequel la demande comprend une portion d' en-tête (520) spécifiant le premier format et le deuxième format demandé et une portion de données utiles (540) contenant les informations de localisation de l'unité de communication dans le premier format;
un moyen de traduire les informations de localisation de l'unité de communication dans la demande à partir du premier format dans le deuxième format;
un moyen de générer une réponse (600) contenant les informations de localisation de l'unité de communication dans le deuxième format; et
un moyen de transmettre la réponse vers l'unité de communication par l'intermédiaire du réseau de communication.

8. Système selon la revendication 7, dans lequel la demande de traduction des informations de localisation est un message Session Initiation Protocol, SIP, OPTIONS (500).

9. Système selon la revendication 7, dans lequel la réponse contenant les informations de localisation traduites dans le deuxième format est un message SIP "200 OK" (600).

10. Système selon la revendication 7, dans lequel le serveur est un serveur sécurisé.

11. Système selon la revendication 7, comprenant en outre l'unité de communication (200), l'unité de communication ayant un moyen de générer la demande et ayant en outre un moyen : d'émettre une demande pour acquérir des informations de localisation, et de recevoir une réponse contenant les informations de localisation.

12. Système selon la revendication 11, dans lequel la demande pour acquérir les informations de localisation est une demande Dynamic Host Configuration Protocol, DHCP, et la réponse contenant les informations de localisation est une réponse DHCP (700).

13. Système selon la revendication 7, dont le serveur comprend en outre une base de données de traduction de localisation (400) configurée pour contenir les informations de localisation dans le deuxième format.

14. Système selon la revendication 13, dont le serveur comprend en outre :
un moyen d'interroger la base de données de traduction de localisation pour trouver les informations de localisation dans le deuxième format.

15. Support lisible par un ordinateur comprenant des instructions exécutables pas un ordinateur pour mettre en oeuvre un procédé selon l'une quelconque des revendications 1 à 6.
